# EUROPEAN PATENT SPECIFICATION

(11) **EP 2 406 841 B1**
(45) Date of publication and mention of the grant of the patent: **08.05.2019**
(21) Application number: 10751492.9
(22) Date of filing: 12.03.2010
(51) Int. Cl.: H01M 4/92, H01M 4/86, B01J 27/185, H01M 8/10

(54) **PLATINUM PHOSPHIDE AS A CATHODE CATALYST FOR PEMFCS AND PHOSPHOROUS TREATMENT OF CATALYSTS FOR FUEL CELL**
PLATINPHOSPHID ALS KATHODENKATALYSATOR FÜR PEMFCS UND PHOSPHORBEARBEITUNG VON KATALYSATOREN FÜR EINE BRENNSTOFFZELLE
PHOSPHURE DE PLATINE EN TANT QUE CATALYSEUR DE CATHODE POUR PEMFC ET TRAITEMENT AU PHOSPHORE DE CATALYSEURS POUR PILE À COMBUSTIBLE

(30) Priority: 12.03.2009 US 159628 P; 13.03.2009 US 159838 P; 13.03.2009 US 159843 P; 12.03.2009 US 159633 P
(43) Date of publication of application: 18.01.2012
(73) Proprietor: Daimler AG, 70327 Stuttgart (DE); Ford Motor Company, Dearborn, MI 48126 (US)
(72) Inventor: CAMPBELL, Stephen, Maple Ridge, BC V4R 2E6 (CA); KREMLIAKOVA, Natalia, Burnaby, BC V5J 5H2 (CA); MCDERMID, Scott, Vancouver, BC V5K 5H7 (CA)
(74) Representative: Dr. Weitzel & Partner
(86) International application number: PCT/US2010/027181
(87) International publication number: WO 2010/105187

(56) References cited:
- CN-C- 100 364 157
- US-A- 4 454 246
- US-A1- 2006 099 488
- US-A1- 2007 026 292
- US-A1- 2008 020 924
- US-B1- 6 232 264
- SUZUKI ET AL.: 'Platinum-Phosphorus Nanoparticles on Carbon Supports for Oxygen-Reduction Catalysts.' JOUMAL OF THE ELECTROCHEMCIAL SOCIETY vol. 156, no. 1, October 2008, pages B27 - B31, XP007910654

## Description

### PRIORITY

This application claims priority to U.S. Provisional Application Nos. 61/159,633 and 61/159,628, filed March 12, 2009, and 61/159,843 and 61/159,838, filed March 13, 2009.

### FIELD OF ART

The present disclosure relates to a catalyst comprising platinum phosphide having a cubic structure and a method of making the catalyst. The present disclosure further relates to a fuel cell incorporating the catalyst and a use of the fuel cell for making electrical power.

### BACKGROUND

Proton exchange membrane fuel cells (PEMFCs) are a candidate for transport fuel cell applications (e.g. vehicles) as well as stationary fuel cell applications. These fuel cells require active and stable catalysts both at the anode and at the cathode.

Currently, PEMFCs use platinum catalysts such as carbon-supported platinum and platinum-transition metal alloy catalysts. While current platinum catalysts may be sufficient for application at the anode, the fuel cell industry seeks cathode catalysts having improved stability to dissolution and sustained or improved activity. Improved stability and activity are necessary to compensate for required catalyst loading reductions with increased fuel cell stack volume power density.

It is known that platinum-transition metal alloy catalysts have enhanced activity for the oxygen reduction reaction (ORR) at the cathode compared to carbon-supported platinum catalysts. However, current platinum catalysts lack sufficient stability in the acidic electrolytes of PEMFCs.

For example, during operation of a PEMFC, carbon-supported platinum dissolves or agglomerates resulting in electrochemical surface area (ECA) losses thereby decreasing catalyst activity. Similarly, transition metals of the platinum-transition metal alloy catalysts eventually dissolve to a greater extent than platinum. Accordingly, these platinum-transition metal alloy catalysts are eventually no more reactive than simple platinum catalysts.

Therefore, there is a need for platinum catalysts having improved stability and sustained or improved activity for use in PEMFCs.

### SUMMARY

Disclosed herein is a catalyst comprising platinum phosphide having a cubic structure. Also disclosed herein is a method of making the catalyst. The method comprises combining a platinum catalyst with a phosphiding agent and heating the platinum catalyst and the phosphiding agent.

Further disclosed herein is a fuel cell comprising the catalyst. Additionally, disclosed herein is a use of the fuel cell for making electrical power. The use comprises the following steps: providing hydrogen to an anode of a PEMFC comprising the catalyst; reacting the hydrogen at the anode to provide protons and electrons; causing the electrons to travel along an external circuit to a cathode of the fuel cell to provide electrical power; providing oxygen to the cathode; and reacting the protons, electrons, and oxygen at the cathode to provide water.

Among other factors, the catalyst comprising platinum phosphide having a cubic structure can exhibit enhanced stability to dissolution in an acidic environment, can better maintain its activity in use, and can even exhibit increased activity. These catalysts may be easily synthesized from currently available, commercial platinum catalysts.

The advantages of the catalyst disclosed herein can impart advantages to a fuel cell utilizing the catalyst. For example, increased catalyst activity can enable lower catalyst loading and decreased fuel cell cost. Increased stability and preserved or improved activity can also reduce or prevent voltage losses and prolong fuel cell life. Furthermore, the catalyst disclosed herein can reduce or prevent damage to fuel cell components caused by, for example, carbon corrosion and radical formation.

### BRIEF DESCRIPTION OF THE DRAWINGS

FIG. 1 shows the XRD spectrum for the catalyst of Example 1.
FIG. 2 shows the XRD spectrum for the catalyst of Example 2.
FIG. 3 shows the XRD spectrum for the catalyst of Example 3.
FIG. 4 shows the XRD spectrum for the catalyst of Example 4.
FIG. 5 shows the XRD spectrum for the catalyst of Example 5.
FIG. 6 shows XRD spectrum for TKK 52.
FIG. 7 shows cyclic voltammograms for the catalyst of Example 4 in 0.5 M sulphuric acid before and after cycling between 0.05 V and 0.6 V.
FIG. 8 shows Tafel plots for the catalyst of Example 4 in 0.5 M sulphuric acid, normalized to the active Pt surface area, a) before SWC; b) after SWC at 0.05-0.6 V; and c) before and after SWC between 0.05 V and 0.6 V.
FIG. 9 shows cyclic voltammograms for the catalyst of Example 4 in 0.1 M perchloric acid before and after cycling between 0.05 V and 0.6 V.
FIG. 10 shows Tafel plots for the catalyst of Example 4 and TKK 52, normalized to the active Pt surface area, in 0.1 M perchloric acid before and after cycling between 0.05 V and 0.6 V.
FIG. 11 shows cyclic voltammograms for the catalyst of Example 4 in 0.1 M perchloric acid before and after cycling between 0.05 V and 1.2 V.
FIG. 12 shows Tafel plots for the catalyst of Example 4, normalized to the active Pt surface area, in 0.1 M perchloric acid before and after cycling between 0.05 V and 1.2 V.
FIG. 13 shows cyclic voltammograms for the catalyst of Example 2 in 0.1 M perchloric acid before and after cycling between 0.05 V and 0.6 V.
FIG. 14 shows Tafel plots for the catalyst of Example 2, normalized to the active Pt surface area, in 0.1 M perchloric acid before and after cycling between 0.05 V and 0.6 V.
FIG. 15 shows cyclic voltammograms for the catalyst of Example 2 in 0.1 M perchloric acid before and after cycling between 0.05 V and 1.2 V.
FIG. 16 shows Tafel plots for the catalyst of Example 2, normalized to the active Pt surface area, in 0.1 M perchloric acid before and after cycling between 0.05 V and 1.2 V.
FIG. 17 shows cyclic voltammograms for the catalyst of Example 3 in 0.1 M perchloric acid before and after cycling between 0.05 V and 1.2 V.
FIG. 18 shows Tafel plots for the catalyst of Example 3, normalized to the active Pt surface area, in 0.1 M perchloric acid before and after cycling between 0.05 V and 1.2 V.
FIG. 19 shows cyclic voltammograms for the catalyst of Example 3 in 0.1 M perchloric acid before and after cycling between 0.05 V and 0.6 V.
FIG. 20 shows Tafel plots for the catalyst of Example 3, normalized to the active Pt surface area, in 0.1 M perchloric acid before and after cycling between 0.05 V and 0.6 V.
FIG. 21 shows Tafel plots for the catalyst of Example 3, normalized to the active Pt surface area, a) before SWC; b) after SWC at 0.05-0.6 V; and c) 0.05-1.2 V versus P amount.
FIG. 22 shows cyclic voltammograms for the catalyst of Example 11 before and after SWC from 0.6-1.2 V, 60 s, 100 cycles.
FIG. 23 shows cyclic voltammograms for TKK 50 before and after SWC from 0.6-1.2 V, 60 s, 100 cycles.
FIG. 24 shows initial ORR Tafel plots for TKK 50 and the catalyst of Example 11.
FIG. 25 shows initial, 24 hour, and 48 hour cyclic voltammograms for TKK 50 at a 1.2 V potential hold.
FIG. 26 shows initial, 24 hour, 48 hour, 72 hour, and 96 hour cyclic voltammograms for the catalyst of Example 11 at a 1.2 V potential hold.
FIG. 27 shows the XRD spectrum for the catalyst of Example 11.
FIG. 28 shows cyclic voltammograms for the catalyst of Example 11 and TKK 50 before and after SWC from 0.05-0.6 V, 30 s, 1000 cycles.
FIG. 29 shows cyclic voltammograms for the catalyst of Example 11 and TKK 50 before and after SWC from 0.6-1.5 V, 60 s, 100 cycles.
FIG. 29A shows cyclic voltammograms for the catalyst of Example 11 and TKK 50 before and after SWC from 0.6-1.2 V, 60 s, 100 cycles.
FIG. 30 shows Tafel plots for the catalyst of Example 11 and TKK 50 before and after SWC from 0.05-0.6 V, 30 s, 1000 cycles.
FIG. 31 shows Tafel plots for the catalyst of Example 11 and TKK 50 before and after SWC from 0.6-1.2 V, 30 s, 1000 cycles.
FIG. 32 shows Tafel plots for the catalyst of Example 11 and TKK 50 before and after SWC from 0.6-1.5 V, 60 s, 100 cycles.
FIG. 33 shows the cubic structure of the platinum phosphide of the catalyst disclosed herein.
FIG. 34 shows the XRD spectra of the catalyst of Example 15 and TKK 50.
FIG. 35 shows the XRD spectra of the catalysts of Example 16.
FIG. 36 shows the average P/Pt mole ratio of the microwave phosphided catalysts of Examples 15 and 16 as determined by EDX.
FIG. 37 shows the effect of treatment time on final solution temperature for the catalysts of Examples 15 and 16.

### DETAILED DESCRIPTION

### Definitions and Abbreviations

The following terms appear throughout the specification and have the following meanings, unless otherwise indicated.

"CV" means cyclic voltammogram or cycling voltammetry.

"ECA" means electrochemical surface area (cm²/g Pt or m²/g Pt) determined by adsorbed hydrogen oxidation followed by proton desorption. Increased ECA should correspond to decreased catalyst particle size and higher catalyst mass activity.

"EDX" means energy-dispersive x-ray spectroscopy.

"ICP AES" means inductively coupled plasma atomic emission spectroscopy.

"ICP MS" means inductively coupled plasma mass spectrometry.

"OCV" means open cell voltage.

"ORR" means oxygen reduction reaction.

"PEMFC" means proton exchange membrane fuel cell.

"RDE" means rotating disk electrode.

"Stability" refers to stability to dissolution in an acidic environment (e.g. an acidic electrolyte).

"SWC" means square wave cycling.

"TKK 50" and "TKKEA50" refer to a catalyst purchased from the Japanese company Tanaka Kikinzoku Kogyo K.K. The catalyst consists of carbon supported Pt and the ratio of Pt:C is 50 wt% Pt:50 wt% C.

"TKK 52" and "TKKEA52" refer to a catalyst purchased from the Japanese company Tanaka Kikinzoku Kogyo K.K. The catalyst consists of carbon supported Pt₃Co with the ratio of Pt₃Co:C of 52 wt %:48 wt %.

"TOP" means trioctyl phosphine.

"XRD" means x-ray diffraction.

### Catalyst including platinum phosphide having a cubic structure and its applications

The catalyst disclosed herein comprises platinum phosphide (PtP₂) having a cubic structure. In one embodiment, the platinum phosphide comprises a surface layer on a platinum catalyst core. In this embodiment, the platinum catalyst core may comprise a Pt-transition metal alloy. The transition metal may be, for example, Co, Fe, Ni, Cu, or combinations thereof. In one embodiment, the platinum phosphide is directly on a support material. The support material may be, for example, a carbon support material, a metal oxide, a carbide, a nitride, a boride, or combinations thereof.

The catalyst can have an average particle size between about 1 nm and about 50 nm, for example, between about 2 nm and about 10 nm. A smaller average particle size is desirable because it corresponds to higher electrochemical surface area (ECA) and increased catalyst mass activity.

In general, platinum phosphide is a thermally and chemically stable compound. It decomposes at 1670 K and withstands boiling in Aqua Regia for more than 24 hours.

U.S. Patent No. 3,449,169 ("the '169 patent") discloses the first attempt to synthesize platinum phosphide as an electro catalyst. The '169 patent discloses a novel platinum phosphide fuel cell electrode and a method for preparing "high surface area" platinum phosphide. However, the '169 patent does not define the structure of the platinum phosphide and the catalyst disclosed therein did not exhibit exceptional electrochemical behavior. Since this initial investigation of platinum phosphide in fuel cell catalysis, little attention has been devoted to the use of phosphides (or phosphorous) in fuel cell catalysis and even less attention has been devoted to the use of platinum phosphide.

U.S. Patent Application Publication No. 2006/0099488 discloses a fuel cell comprising a catalyst composition containing at least Pt and P. The catalyst composition either comprises Pt particles having P oxide particles deposited on the surface of the Pt particle; or Pt particles having both, P oxide particles deposited on the surface of the Pt particle, and metal phosphide particles being located inside the Pt particle, depending on the synthetic method carried out. Compounds such as bis(acetylacetonato)platinum(II) or, alternatively, platinic hexachloride hexahydrate and sodium hypophosphite are mixed with each other and then heated or treated with ultrasound to obtain the disclosed catalyst composition. The sodium hypophosphite educt, generally the P containing educts used, serve to control and limit, respectively, the particle size of the obtained Pt particles. The disclosed compositions are non-stoichiometric, ranging between Pt₈₅P₁₅ and Pt₈₉P₁₁.

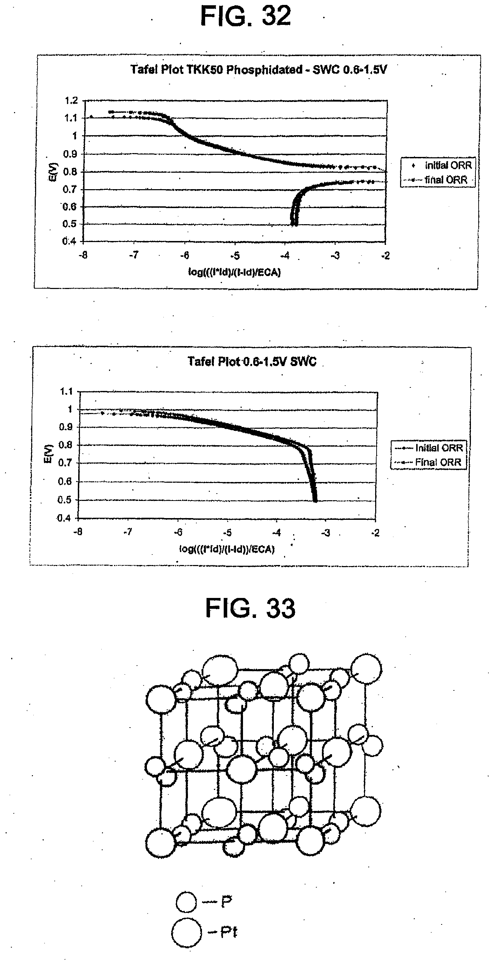

The present inventors have surprisingly discovered platinum phosphide having a cubic structure. In the cubic structure, a=b=c may be equal to 5.69 Å, while α=β=γ=90°. FIG. 33 shows the cubic structure of the platinum phosphide of the catalyst disclosed herein. Platinum phosphide having the cubic structure can provide improved catalyst stability to dissolution as well as better sustained or improved catalyst activity. Platinum phosphide having the cubic structure can exhibit activity higher than or comparable to platinum catalysts currently used at anodes and cathodes in PEMFCs. Platinum phosphide having the cubic structure can also reduce or prevent catalyst support corrosion.

When the platinum phosphide comprises a surface layer on a platinum catalyst core, the phosphide layer can enhance the platinum catalyst core's stability to dissolution in an acidic environment, thus preserving the activity of the platinum catalyst core. For example, the phosphide layer can reduce or prevent dissolution of platinum and transition metals of platinum-transition metal alloy catalysts. The platinum phosphide may even enhance catalyst activity. Without being bound by a particular theory, it is believed that the surface phosphorous present in the cubic structure of the platinum phosphide provides multiple active sites.

The catalyst disclosed herein is particularly useful in fuel cell applications because it can exhibit better sustained or improved activity for the oxygen reduction reaction (ORR). Fuel cells include an anode and a cathode separated by an electrolyte. At the anode, a catalyst oxidizes a fuel (e.g. hydrogen, natural gas, methanol, diesel, gasoline) to provide positively charged ions and electrons. The positively charged ions then pass through the electrolyte, but the electrons do not. This is because the electrolyte is conductive to the positively charged ions, but non-conductive to the electrons. Instead, the electrons travel through a wire creating an electrical current. This electrical current is the primary product of the fuel cell and can power electrical devices. At the cathode, the positively charged ions, electrons, and an oxidant, usually oxygen, react in the presence of a catalyst to create water as a waste product. Accordingly, an oxidation reaction occurs at the anode and a reduction reaction occurs at the cathode. Since oxygen is typically reduced at the cathode, an oxygen reduction reaction typically occurs at the cathode. Thus, the catalyst disclosed herein is especially useful as a cathode catalyst.

The catalyst disclosed herein can exhibit electrochemical properties similar to known platinum catalysts useful as anode catalysts. Accordingly, the catalyst disclosed herein may also be used as an anode catalyst.

Accordingly, a fuel cell may comprise the catalyst disclosed herein. In one embodiment, the catalyst is located at a cathode of the fuel cell. In another embodiment, the catalyst is located at an anode of the fuel cell. In yet another embodiment, the catalyst is located at both the anode and the cathode of the fuel cell.

In one embodiment, the fuel cell is a proton exchange membrane fuel cell (PEMFC). PEMFCs are well known in the art and have various advantages over other types of fuel cells. PEMFCs utilize a hydrated, solid polymer membrane as the electrolyte separating the anode and the cathode. A solid electrolyte is advantageous over a liquid electrolyte because the solid electrolyte permits less expensive manufacture of the fuel cell, exhibits fewer difficulties with orientation, and exhibits fewer problems with corrosion. Compared to other fuel cells, PEMFCs can generate more power per volume or weight of the fuel cell. They also have a relatively low operating temperature (e.g. less than 100°C). This low operating temperature permits rapid start-up. PEMFCs also have the ability to rapidly change power output. As a result, PEMFCs are believed to be the best type of fuel cell to replace gasoline and diesel internal combustion engines in vehicles.

Generally in PEMFCs, the fuel provided to the anode is hydrogen and the reactant provided to the cathode is oxygen in the form of air. Accordingly, the following reactions generally occur in a PEMFC:

| | |
|---|---|
| Anode reaction: | 2H₂ → 4H+ + 4e- |
| Cathode reaction: | O₂ + 4H+ + 4e- → 2H₂O |
| Overall cell reaction: | 2H₂ + O₂ → 2H₂O |

The cathode reaction is an oxygen reduction reaction. However, the fuel of PEMFCs can vary. For example, the fuel can be methanol, ethanol, or formic acid.

The catalyst can be used in various types of PEMFCs (e.g. PEMFCs consuming hydrogen, PEMFCs consuming methanol, PEMFCs consuming ethanol, PEMFCs consuming formic acid, etc.). While different types of PEMFCs generally utilize slightly different catalysts, the catalyst disclosed herein is useful in various types of PEMFCs because it can exhibit electrochemical properties similar to known platinum catalysts and can exhibit better sustained or increased activity for the ORR.

The catalyst can be used in other types of fuel cells besides PEMFCs which incorporate the oxygen reduction reaction. For example, the catalyst can be used in a phosphoric acid fuel cell. Again, this is because the catalyst can exhibit electrochemical properties similar to known platinum catalysts and can exhibit better sustained or increased activity for the ORR.

Fuel cells are capable of providing continuous power. However, in order for a fuel cell to provide continuous power, the reactants (e.g. fuel and oxidant) must flow continuously and the catalysts must remain active. Accordingly, the present catalyst is particularly advantageous because it can exhibit better sustained activity.

Other than vehicular applications, fuel cells are useful for providing power in various applications where a source of continuous power is important. These applications include base stations and cell sites for wireless communications, emergency power systems, uninterrupted power supplies, and small electronic devices (e.g. notebook computers, portable charging docks, cellular phones, and small heating appliances). Accordingly, the present catalyst may be useful in other applications besides vehicular applications.

More generally, since the catalyst is useful in fuel cells, it can be used for making electrical power. This use involves providing hydrogen to an anode of a PEMFC comprising the catalyst and reacting the hydrogen at the anode to provide protons and electrons. This use further involves causing the electrons to travel along an external circuit to a cathode of the fuel cell to provide electrical power. This use also involves providing oxygen to the cathode and reacting the protons, electrons, and oxygen at the cathode to provide water.

### Method of making catalyst including platinum phosphide having a cubic structure

An advantage of the catalyst disclosed herein is that it can be easily synthesized from currently available, commercial platinum catalysts such as carbon-supported platinum and platinum-transition metal alloy catalysts. The catalyst can be made by combining one of these commercial platinum catalysts (e.g. TKK 50, TKK 52, Johnson Matthey catalysts, E-TEK catalysts) with a phosphiding agent and heating the platinum catalyst and the phosphiding agent. Exemplary phosphiding agents include, but are not limited to, elemental phosphorous (P), phosphine gas (PH₃), trioctyl phosphine (TOP), and phosphides.

Reaction between the platinum catalyst and the phosphiding agent provides platinum phosphide having a cubic structure. The extent of the reaction during the heating step between the platinum catalyst and the phosphiding agent determines the degree of phosphidation of the platinum catalyst. In other words, the extent of reaction determines whether the platinum phosphide comprises a surface layer on a platinum catalyst core or the platinum phosphide is directly on a support material. The extent of reaction depends on the amount of phosphiding agent, the reaction temperature, and the reaction time. Both types of catalysts can be useful in fuel cell applications. However, partially phosphided catalysts (i.e. catalysts with platinum phosphide comprising a surface layer on a platinum catalyst core) are particularly advantageous over completely phosphided catalysts (i.e. catalysts where the platinum phosphide is directly on a support material) because they can have a smaller particle size and, therefore, increased mass activity. Furthermore, smaller platinum catalyst particles at a given metal loading can provide smaller particles of the catalyst disclosed herein with increased ECA and increased mass activity.

The heating step may occur in a vacuum. In a vacuum, solid elemental phosphorous converts to the vapor state and reacts with platinum. However, the heating step may occur at different pressures. For example, if PH₃ is used as the phosphiding agent, the heating step may occur at about 1 atm. The platinum catalyst and the phosphiding agent may be heated at between about 200°C and about 1000°C, for example, between about 450°C and about 700°C. The platinum catalyst and the phosphiding agent may be heated for a time period of between about 5 min and about 60 min. A fast cooling step may follow the heating step to quench the catalyst and avoid catalytic cluster sintering. During the fast cooling step, the catalyst may be cooled from the reaction temperature to room temperature in between about 5 min and about 10 min. In a particular embodiment, the platinum catalyst and the phosphiding agent are heated at a temperature of about 700°C for about 1 hour followed by fast cooling. Reducing the reaction time and treating a platinum catalyst with smaller particles can advantageously increase the ECA and the catalyst mass activity.

In one embodiment, the heating step can involve treating the platinum catalyst and the phosphiding agent with microwave radiation. Using microwave radiation is advantageous because it can decrease the catalyst particle size, thereby increasing the catalyst mass activity. For example, heating the platinum catalyst and the phosphiding catalyst without microwave radiation can produce a platinum phosphide catalyst having high surface activity (e.g. approximately 1.5-2 times that of platinum), but significant particle size growth occurs (e.g. between 3 nm and 7 nm or even greater than 7 nm). In contrast, heating with microwave radiation can significantly reduce particle size growth and provide a catalyst having a smaller average particle size.

The microwave power can be between about 800 W and about 1100 W, for example, between about 1000 W and about 1100W. In one embodiment, the microwave power can be above about 1000 W. Higher microwave power can advantageously provide a higher reaction temperature, a faster phosphiding reaction, a smaller catalyst particle size, and increased catalyst mass activity.

The microwave radiation treatment may be conducted under ambient pressure.

The following examples are provided to further illustrate the present invention and the advantages thereof. The examples are meant to be only illustrative, and not limiting.

### EXAMPLES

### Example 1: Synthesis of platinum phosphide catalyst using TKK 50 and P

A weighted amount of Phosphorous Red (Puratronic 99.999%) was combined with a weighted amount of TKK 50 in an atomic ratio of Pt:P = 1:2 in a quartz ampoule. The ampoule was vacuumed (to 10⁻⁵ Torr) and sealed by CANSCI Glass Production, Burnaby. The sample was then heated at 700°C for 1 hour followed by fast cooling.

### Example 2: Synthesis of catalyst with platinum phosphide surface layer using TKK 52 and P

A weighted amount of Phosphorous Red (Puratronic 99.999%) was combined with a weighted amount of TKK 52 in an atomic ratio of P:Co = 1:1 in a quartz ampoule. The ampoule was vacuumed (to 10⁻⁵ Torr) and sealed by CANSCI Glass Production, Burnaby. The sample was then heated at 700°C for 1 hour followed by fast cooling.

### Example 3: Synthesis of catalyst with platinum phosphide surface layer using TKK 52 and P

A weighted amount of Phosphorous Red (Puratronic 99.999%) was combined with a weighted amount of TKK 52 in an atomic ratio of P:Co = 1:2 in a quartz ampoule. The ampoule was vacuumed (to 10⁻⁵ Torr) and sealed by CANSCI Glass Production, Burnaby. The sample was then heated at 700°C for 1 hour followed by fast cooling.

### Example 4: Synthesis of catalyst with platinum phosphide surface layer using TKK 52 and P

A weighted amount of Phosphorous Red (Puratronic 99.999%) was combined with a weighted amount of TKK 52 in a non-stoichiometric excess of P relative to Co in a quartz ampoule. The ampoule was vacuumed (to 10⁻⁵ Torr) and sealed by CANSCI Glass Production, Burnaby. The sample was then heated at 700°C for 1 hour followed by fast cooling.

### Example 5: Synthesis of catalyst with platinum phosphide surface layer using PtCo and P

A weighted amount of Phosphorous Red (Puratronic 99.999%) was combined with a weighted amount of PtCo in a ratio of Pt:Co:P = 1:1:1 in a quartz ampoule. The ampoule was vacuumed (to 10⁻⁵ Torr) and sealed by CANSCI Glass Production, Burnaby. The sample was then heated at 700°C for 1 hour followed by fast cooling.

### Example 6: Crystalline structures

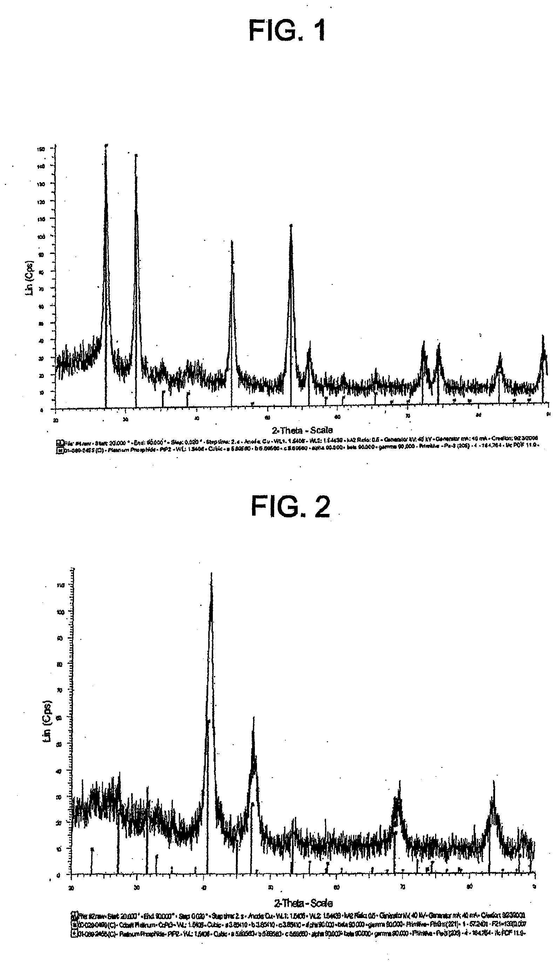

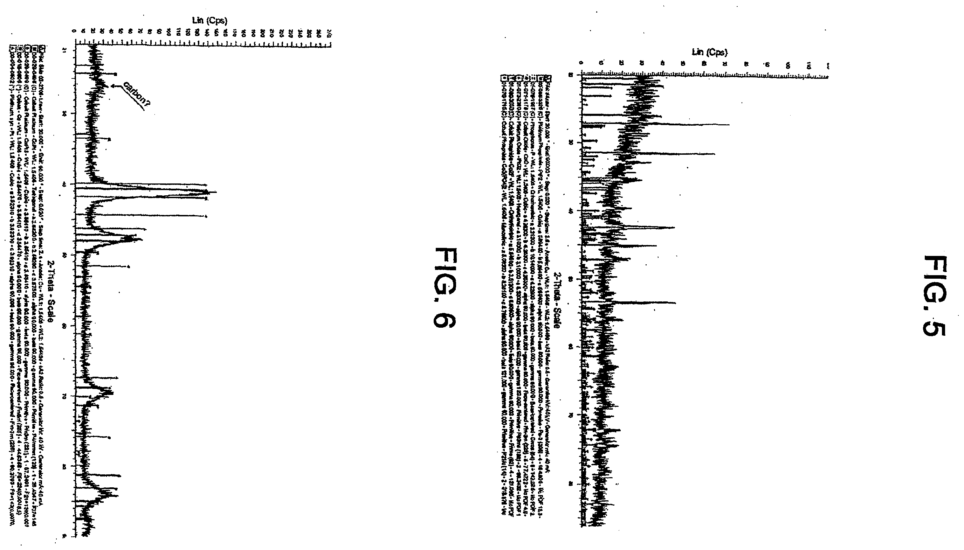

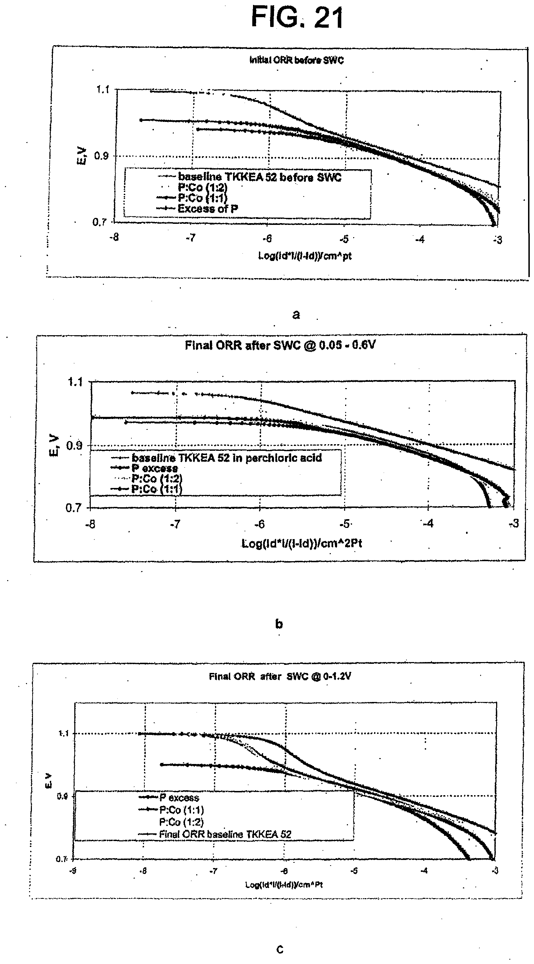

To determine the crystalline structures of the catalysts of Examples 1-5, the catalysts were subjected to XRD. FIGS. 1-5 show the XRD spectra for the catalysts of Examples 1-5. TKK 52 was also subjected to XRD. FIG. 6 shows the XRD spectra for TKK 52.

Table 1 shows the phase compositions and lattice parameters of TKK 50, TKK 52, and the catalysts of Examples 1-5. The catalysts of Examples 1-5 show the presence of the PtP₂ cubic phase.

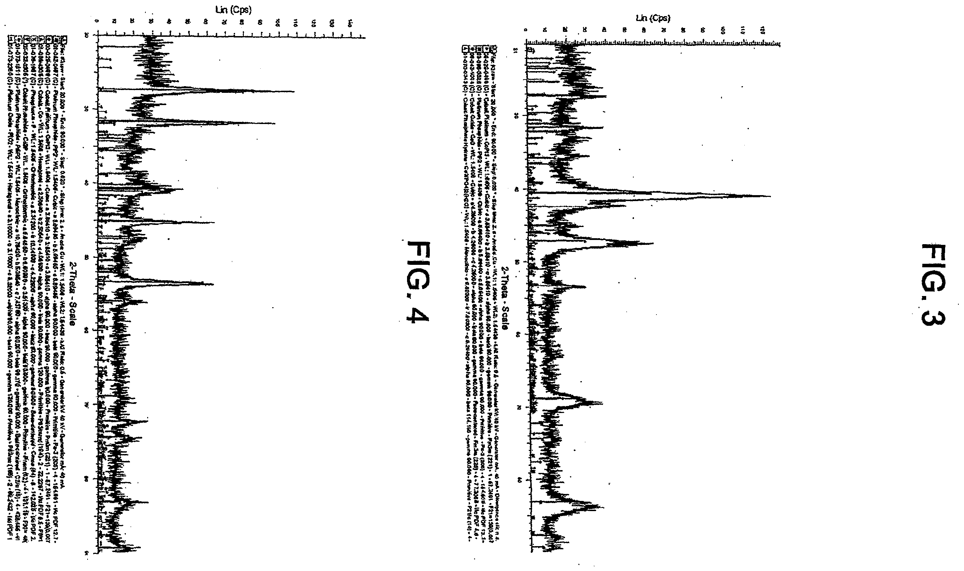

In Examples 2-5, the PtCo alloy is sacrificed to form the PtP₂ cubic phase. None of the catalysts of Examples 2-5 include a PtCo tetragonal phase. As the P content increases, the fraction of PtP₂ increases and the fraction of PtCo alloy decreases. See FIG. 4. All Pt transforms to the PtP₂ phase. See FIG. 5. The lowest stoichiometrical Co₂P phase is hardly found when PtCo ordered alloy with tetragonal structure was treated with phosphorous with the atomic ratio Pt=Co=P sufficient to produce the CoPₓ phase. This means that it is impossible to stabilize Co by converting it to the phosphide form in the presence of Pt.

**Table 1**

| Catalyst | Precursor | Phase | Lattice parameters (Å) | Particle size (nm) |
|---|---|---|---|---|
| TKK 50 | N/A | Pt cubic | 3.92400 | 2.5-3 |
| TKK 52 | N/A | PtCo tetragonal | 2.68200, 2.68200 3.67500 | ∼6.02 |
| | | Pt₃Co cubic | 3.85410 | |
| Example 1: carbon supported Pt phosphide | TKK 50 | PtP₂ cubic | 5.69560 | ∼ 10 |
| Example 2: carbon supported PtCo phosphide | TKK 52 | Pt₃Co cubic | 3.85410 | ∼6.1 |
| | | PtP₂ cubic | 5.69560 | |
| Example 3: carbon supported PtCo phosphide | TKK 52 | Pt₃Co cubic | 3.85410 | ∼7.7 |
| | | PtP₂ cubic | 5.69560 | |
| | | CoO cubic | 4.26000 | |
| | | Co₃(PO₄)₂*H₂O monoclinic | 9.52300, 7.90300, 9.29400 | |
| Example 4: carbon supported phosphide | TKK 52 | PtP₂ cubic | 5.68560 | ∼4.4 |
| | | Pt₃Co cubic | 3.85410 | |
| | | Co hexagonal | a,b-2.50540, c-4.08930 | |
| | | P orthorhombic | a-3.31200, b-10.14000, c-4.22900 | |
| | | Co₂P orthorhombic | a-5.64650, b-6.60990, c-3.51300 | |
| | | Pt₅P₂ monoclinic | a-10.76420, b-5.38540, c-7.43780 | |
| | | PtO₂ hexagonal | a,b-3.10000, c-8.32000 | |
| Example 5: PtCo phosphide | Pt Co black, very magnetic | PtP₂ cubic | 5.69400 | Loss of magnetic properties |
| | | P orthorhombic | a-3.31200, b-10.14000, c-4.22900 | |
| | | CoO cubic | 4.26300 | |
| | | PtO₂ hexagonal | a,b-3.10000, c-8.32000 | |
| | | Co₂P orthorhombic | a-5.64600, c-6.60800 c-3.51300 | |
| | | Co₃(PO₄)₂ monoclinic | a-5.06300, c-8.36100, c-8.78800 | |

### Example 7: Chemical stability in acidic environment

The catalysts were treated with 0.1M sulphuric acid at 80°C for 48 hours. The ratio of acid to catalyst was ∼ 75. To determine Co and Pt content in the acid, decants of the acid were subjected to ICP AES analyses. Table 2 provides the Pt, Co, and P lost to solution for TKK 52 and the catalysts of Examples 1-3. The Co dissolved is Co from the PtCo phase sacrificed to form PtP₂.

**Table 2**

| Catalyst | Pt dissolved (mg/L) | Co dissolved (mg/L) (%) | P dissolved (mg/L) (total, mg) (%) | Atomic Co/P in solution | Comments |
|---|---|---|---|---|---|
| TKK 52 | 0.12 | 57 | | | Pt_{2.4}Co=2/3(Pt₃Co)+1/3PtCo |
| | | 7.25% | | | |
| Example 2 | <0.10 | 244 | 167 | 1.46 | CoP*Co₂P=Co_{1.5}P |
| | | 31% | 1.2525 | | |
| | | | 2.66% | | |
| Example 3 | <0.10 | 278 | 180 | 1.54 | |
| | | 35.3% | 1.35 | | |
| | | | 2.87% | | |
| Example 1 | <0.10 | | 194 | | 1.455 mg in 7.5 g of solution |
| | | | 1.455 | | |
| | | | 3% | | |

Table 2 shows that phosphidation in vacuum completely protects Pt from dissolution in strong acid media.

As shown in Table 1, the PtCo phase does not exist at all in phosphided samples of the TKK 52 catalyst. Without being bound by any particular theory, it is believed that the first "PtCo" phase which makes up approximately one third (by molar) of the total PtₓCo phase is sacrificed to produce PtP₂ and Co is expelled. Table 2 confirms this theory as the catalysts of Examples 2 and 3 leached approximately 1/3 of their total Co. Without being bound by any particular theory, it is believed that platinum phosphide covers the Pt₃Co crystallites as a protective layer preventing the Pt₃Co phase from expelling further Co. This theory is indirectly proven by the initial Pt:Co ratio of TKK 52 being equal to 2.4:1, which corresponds to 2/3 Pt₃Co + 1/3 PtCo.

### Examples 8-10: Electrochemical evaluation

For electrochemical evaluation, catalysts in acid, a Princeton Applied Research Potentiostat/Galvanostat 263A and a Pine Research Inst. Rotating Disk Electrode (RDE) were used. A standard hydrogen electrode was used as the voltage reference. From 20 to 40 mg of catalyst was sonicated for 10 min in 2 mL of glacial acetic acid. 5-15 µL of the prepared inks were deposited on the RDE and covered with 5 µL of 1050 equivalent weight Nafion dispersion in 2-propanol/water solution.

The catalysts of Examples 2-4 were tested according to the following protocol:
1. CV in the 0.05-1.2 V range at ω = 100 mV/sec, 1 mA, nitrogen bubbling, ∼3-10 cycles to determine ECA. If necessary, the catalyst was activated using CV for up to 100 cycles (until constant pattern) at the same conditions.
2. Potentiodynamic scanning from 0.1 V versus OCV to 0.2 V versus "Reference" at ω = 2mV/sec to determine catalyst activity towards ORR at oxygen bubbling.
3. SWC for 100 cycles at 0.05 V and 0.6 V for 30 sec for each voltage in nitrogen (durability and stability test)
4. CV cycling to determine Pt ECA after SWC at nitrogen bubbling.
5. Potentiodynamic scanning from 0.1 V versus OCV to 0.2 V versus "Reference" at ω = 2 mV/sec after SWC at oxygen bubbling.

### Example 8: RDE analysis of the catalyst of Example 4

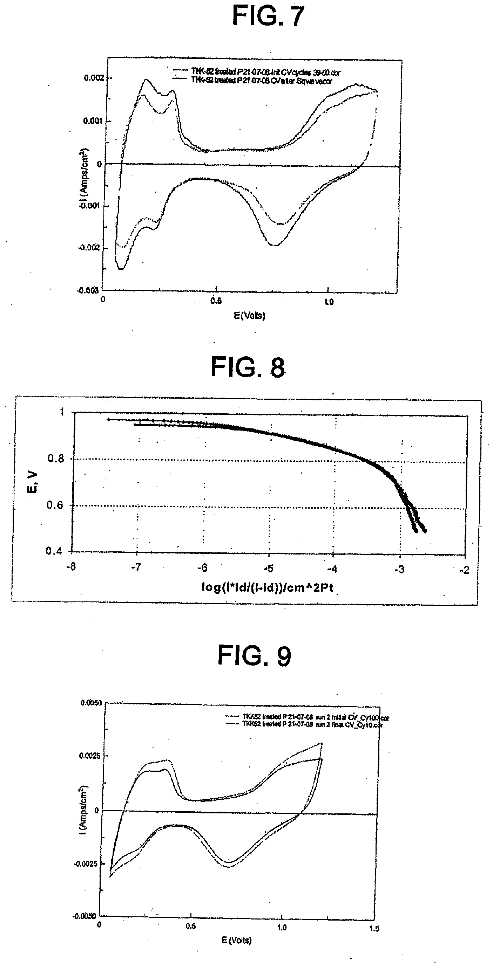

FIG. 7 shows cyclic voltammograms for the catalyst of Example 4 in 0.5 M sulphuric acid before and after cycling between 0.05 V and 0.6 V.

FIG. 8 shows Tafel plot for the catalyst of Example 4 in 0.5 M sulphuric acid, normalized to the active Pt surface area, a) before SWC; b) after SWC at 0.05-0.6 V; and c) before and after SWC between 0.05 V and 0.6 V.

FIG. 9 shows cyclic voltammograms for the catalyst of Example 4 in 0.1 M perchloric acid before and after cycling between 0.05 V and 0.6 V.

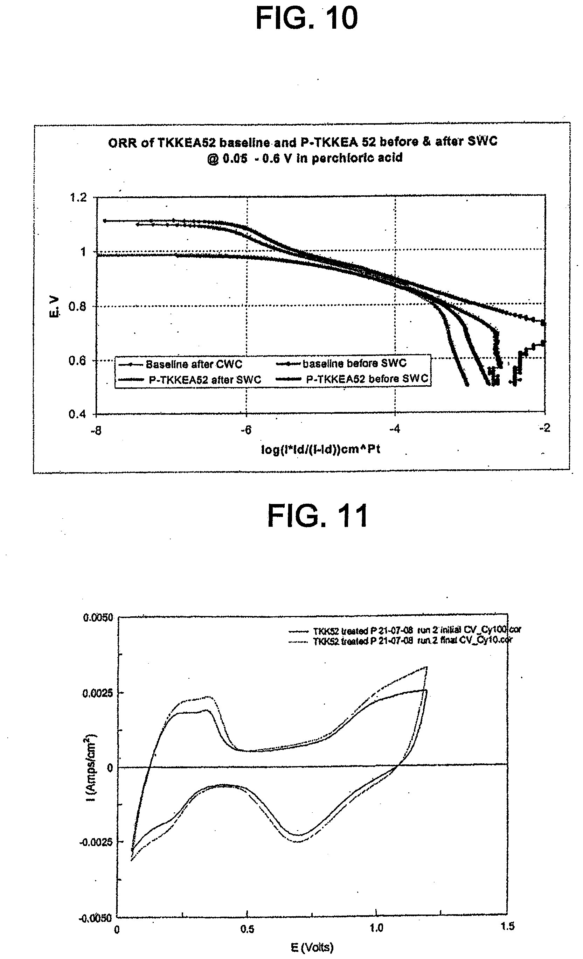

FIG. 10 shows Tafel plots for the catalyst of Example 4 and TKK 52 normalized to the active Pt surface area in 0.1 M perchloric acid before and after cycling between 0.05 V and 0.6 V.

FIG. 11 shows cyclic voltammograms for the catalyst of Example 4 in 0.1 M perchloric acid before and after cycling between 0.05 V and 1.2 V.

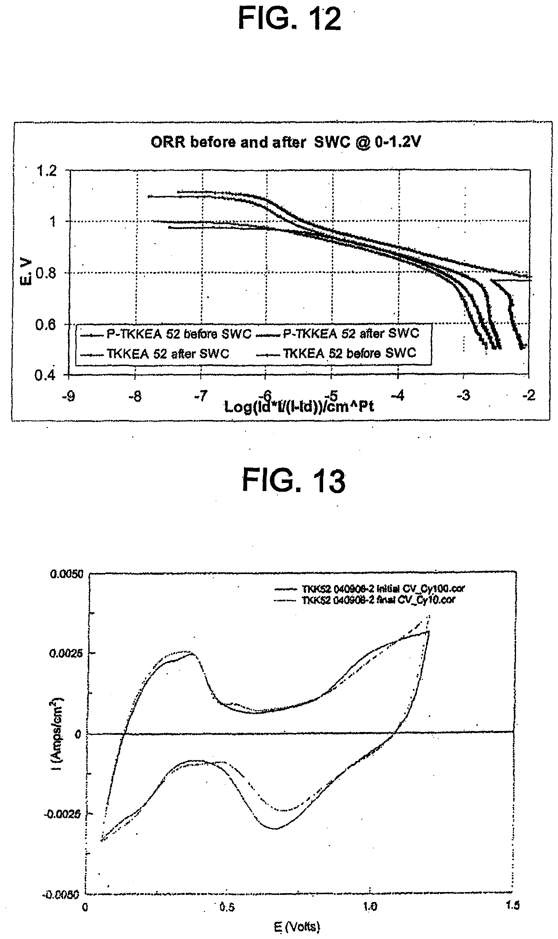

FIG. 12 shows Tafel plots for the catalyst of Example 4, normalized to the active Pt surface area, in 0.1 M perchloric acid before and after cycling between 0.05 V and 1.2 V.

Table 3 shows change in ECA and activity before and after SWC for the catalyst of Example 4.

**Table 3**

| | Cycling range 0.05-0.6 V | | | | | | Cycling range 0.05-1.2 V in 0.1 M perchloric acid | | |
|---|---|---|---|---|---|---|---|---|---|
| | In 0.5 M sulfuric acid | | | In 0.1 M perchloric acid | | | | | |
| | ECA change % | A/g catlyst before SWC | A/g catalyst after SWC | ECA change % | A/g catalyst before SWC | A/g catalys SWCt after | ECA change % | A/g catalyst before SWC | A/g catalyst after SWC |
| Catalyst of Example 4 | -21.13 | 1.475 | 1.227 | 23.9 | 3.053 | 3.41 | 31.77 | 2.52 | 1.91 |
| TKK 52 | 47.2 | | | 28.47 | 5.32 | 4.91 | 39.0 | 3.275 | 2.3 |

The present inventors previously determined that cycling TKK 52 in the region where Co preferably leached out (0.05-0.6 V) resulted in increase of the active Pt surface area followed by decrease in the ORR activity. However, cycling the catalyst of Example 4 between 0.05 and 0.6 V decreased the active platinum surface area by 21.13% and did not change the catalyst activity significantly.

Although the catalyst of Example 4 demonstrated a slightly decreased activity in perchloric acid in comparison with TKK 52, it demonstrated higher activity after SWC at 0.05-0.6 V. Potential cycling in perchloric acid in both voltage regions resulted in an increase of active platinum surface area with almost unchanged ORR activity.

### Example 9: RDE analysis of the catalyst of Example 2

FIG. 13 shows cyclic voltammograms for the catalyst of Example 2 in 0.1 M perchloric acid before and after cycling between 0.05 V and 0.6 V.

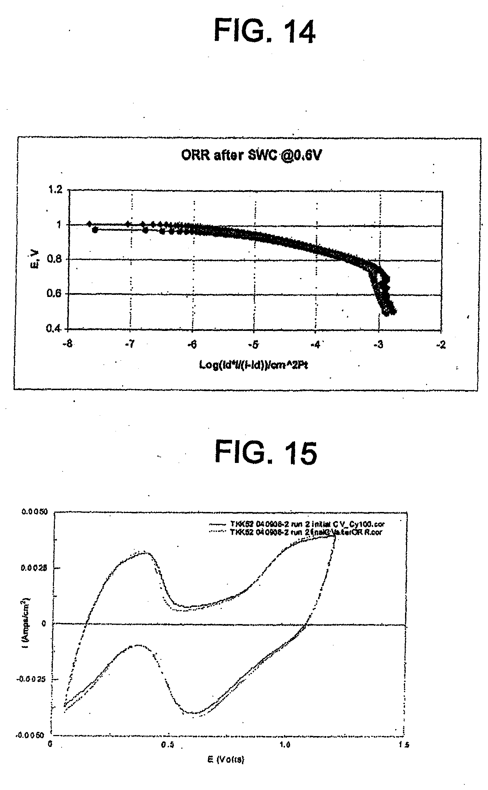

FIG. 14 shows Tafel plots for the catalyst of Example 2, normalized to the active Pt surface area, in 0.1 M perchloric acid before and after cycling between 0.05 V and 0.6 V.

FIG. 15 shows cyclic voltammograms for the catalyst of Example 2 in 0.1 M perchloric acid before and after cycling between 0.05 V and 1.2 V.

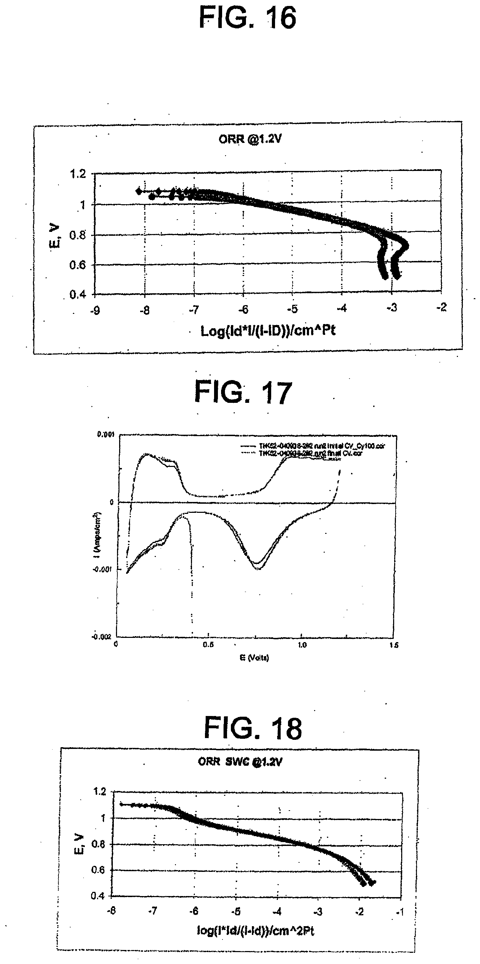

FIG. 16 shows Tafel plots for the catalyst of Example 2, normalized to the active Pt surface area, in 0.1 M perchloric acid before and after cycling between 0.05 V and 1.2 V.

Table 4 shows change in ECA and activity before and after SWC for the catalyst of Example 2. As shown in Table 4, the catalyst of Example 2 exhibited a smaller ECA change and decreased performance losses after SWC (a 5.5% decrease in catalyst mass activity compared to a 29.8% decrease in catalyst mass activity for TKK 52).

**Table 4**

| | Cycling range 0.05-1.2 V in 0.1 M perchloric acid | | |
|---|---|---|---|
| | ECA change % | A/g catalyst before SWC | A/g catalyst after SWC |
| Catalyst of Example 2 | 8.6 | 4.7 | 4.44 |
| TKK 52 | 39.0 | 3.275 | 2.3 |

### Example 10: RDE analysis of the catalyst of Example 3

FIG. 17 shows cyclic voltammograms for the catalyst of Example 3 in 0.1 M perchloric acid before and after cycling between 0.05 V and 1.2 V.

FIG. 18 shows Tafel plots for the catalyst of Example 3, normalized to the active Pt surface area, in 0.1 M perchloric acid before and after cycling between 0.05 V and 1.2 V.

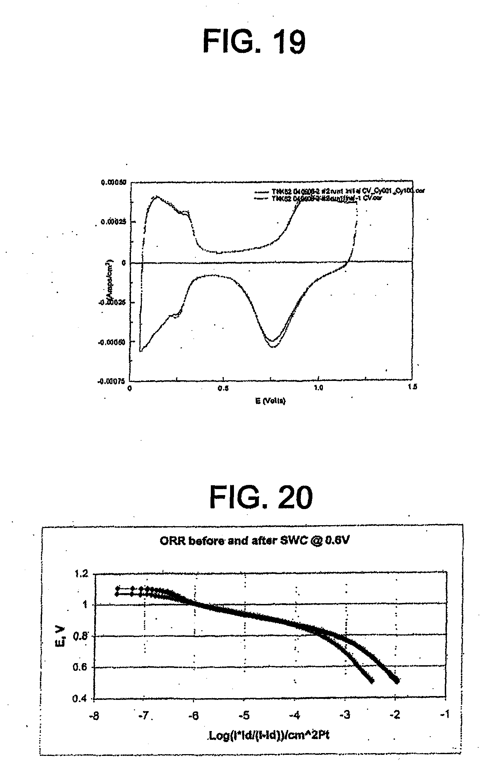

FIG. 19 shows cyclic voltammograms for the catalyst of Example 3 in 0.1 M perchloric acid before and after cycling between 0.05 V and 0.6 V.

FIG. 20 shows Tafel plots for the catalyst of Example 3, normalized to the active Pt surface area, in 0.1 M perchloric acid before and after cycling between 0.05 V and 0.6 V.

Table 5 shows change in ECA and activity before and after SWC for the catalyst of Example 3. As shown in Table 5, although the catalyst of Example 3 exhibited lower absolute performance, this can be attributed to the imperfection of the experiment. Importantly, the catalyst of Example 3 exhibited smaller ECA changes and decreased performance losses after SWC compared to TKK 52.

**Table 5**

| | Cycling range 0.05-0.6 V in 0.1 M perchloric acid | | | Cycling range 0.05-1.2 V in 0.1 M perchloric acid | | |
|---|---|---|---|---|---|---|
| | ECA change % | A/g catalyst before SWC | A/g catalyst after SWC | ECA change % | A/g catalyst before SWC | A/g catalyst after SWC |
| Catalyst of Example 3 | 9.65 | 0.73 | 0.78 | 3.75 | 0.7 | 0.726 |
| TKK 52 | 28.47 | 5.32 | 4.91 | 39.0 | 3.275 | 2.3 |

FIG. 21 shows Tafel plots of TKK 52 and the catalysts of Examples 2-4, normalized to the active Pt surface area, a) before SWC; b) after SWC at 0.05-0.6 V; and c) after SWC at 0.05-1.2 V. FIG. 21 shows that ORR activity remained almost the same after SWC in both voltage regions for the catalysts of Examples 2-4, while ORR activity of TKK 52 decreased. Thus, the PtP₂ phase having its own ORR activity forms a stabilizing and protective layer for Pt₃Co crystallites.

Examples 8-10 show that the ORR activity does not depend on P:Co ratio. Examples 8-10 also show that the initial ORR activities and mass activities of the catalysts of Examples 2-4 are comparable to or even better than the initial ORR activity and mass activity of TKK 52 . The best results were obtained for the catalyst of Example 2 (P:Co = 1:1).

### Example 11: Synthesis of platinum phosphide catalyst using TKK 50 and P

A weighted amount of Phosphorous Red (Puratronic, 99.999%) was combined with a weighted amount of TKK 50 in an atomic ratio of Pt:P = 1:2 in a quartz ampoule. The ampoule was vacuumed (to 10⁻⁵ Torr) and sealed by CANSCI Glass Production, Burnaby. The sample was heated at 700°C for 1 hour followed by fast cooling.

### Example 12: Crystalline structure

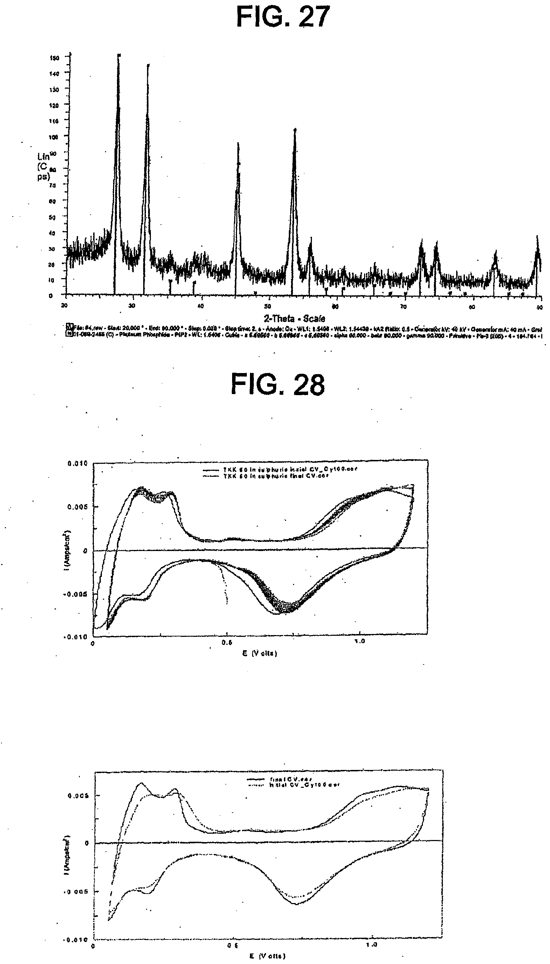

To determine the crystalline structure of the catalyst of Example 11, the catalyst was subjected to XRD. FIG. 27 shows the XRD spectrum for the catalyst of Example 11.

### Example 13: Chemical stability in acidic environment

The catalyst of Example 11 and TKK 50 were each treated with 0.1M sulphuric acid at 80°C for 48 hours. ICP-MS analysis showed no Pt loss (supernatant showed <0.1 mg/L Pt) for the catalyst of Example 11. However, ICP-MS analysis showed a 0.59% loss of total Pt for TKK 50.

### Example 14: Electrochemical evaluation

For electrochemical evaluation, catalysts in 0.5M H₂SO₄ electrolyte at 30°C, a Princeton Applied Research Potentiostat/Galvanostat 263A and a Pine Research Inst. RDE were used. A standard hydrogen electrode was used as the voltage reference. The electrode rotation speed was 2000 rpm.

0.0221 g of the catalyst of Example 11 was transferred to a 5 mL sample vial. 2.0 mL of glacial acetic acid was then volumetrically transferred to the sample vial. The sample was sonicated at room temperature for approximately 10 minutes. 5 µL of the sonicated sample was pipetted onto the RDE and the solvent was allowed to evaporate under a desktop halogen lamp. 5 µL of the sample was applied to the RDE three times. After the solvent evaporated, 5 µL of a Nafion solution (0.5 mL of a 5% Nafion solution diluted in 5 mL of 2-propanol) was applied to the RDE. As a baseline reference, 0.0203 g of TKK 50 was subjected to the procedure described above. Table 6 describes loading of the catalysts onto the RDE.

**Table 6**

| Sample | Mass Catalyst (mg) | Concentration (mg/µL) | Volume (µL) | RDE catalyst loading (mg) |
|---|---|---|---|---|
| Catalyst of Example 11 | 22.1 | 1.105x10⁻² | 15 | 0.166 |
| TKK 50 | 20.3 | 1.015x10⁻² | 15 | 0.152 |

For each catalyst, the electrode was installed and testing initiated. The electrode was subjected to an initial CV cycling from 0.05-1.2 V at 100 mV/s for 100 cycles under N₂. Upon completion of initial CV cycling, the electrolyte was saturated with O₂. The electrode was subjected to an initial ORR with a potential of 0.1 V with respect to OCV and 0.2 V with respect to the reference hydrogen electrode. After ORR, the electrolyte was saturated with N₂ and the electrode was subjected to SWC. Each cycle of SWC held an initial voltage of 0.05 V for 30 seconds and then switched to 0.6 V for 30 seconds. This was repeated for a total of 1000 cycles. Upon completion of SWC, the electrode was subjected to a final 10 cycle CV and a final ORR under the same conditions as the initial CV and the initial ORR. This procedure was repeated for three additional SWC ranges (0.6-0.9 V, 1000 cycles, 30 seconds; 0.6-1.2 V, 100 cycles, 60 seconds; and 0.6-1.5 V, 100 cycles, 60 seconds). In a potentiostatic experiment, an electrode loaded with 15 µL of catalyst was subjected to a 100 cycle CV from 0.05 to 1.2 V at 100 mV/s. The catalyst was then subjected to a static potential of 1.2 V until failure or for 200 hours. At 24 hour intervals, the electrode was subjected to a 10 cycle CV and the electrolyte level was maintained with 18.2 mΩ water. Table 7 provides a summary of these experiments.

**Table 7**

| Name | | Conditions | | Sweep Rate/Hold Time | Electrolyte Saturation Gas | Number of Cycles |
|---|---|---|---|---|---|---|
| 1 | Initial CV | 0.05-1.2 V | | 100 mV/s | N₂ | 100 |
| 2 | Initial ORR | 0.1 vs. OCV and 0.2 vs. reference | | 2 mV/s | O₂ | 1 |
| 3 | SWC | A | 0.05-0.6 V | 30 s | N₂ | 1000 |
| | | B | 0.6-0.9 V | 30 s | N₂ | 1000 |
| | | C | 0.6-1.2 V | 60 s | N₂ | 100 |
| | | D | 0.6-1.5 V | 60 s | N₂ | 100 |
| 4 | Final CV | 0.05-1.2 V | | 100 mV/s | N₂ | 10 |
| 5 | Final ORR | 0.1 vs. OCV and 0.2 vs. reference | | 2 mV/s | O₂ | 1 |
| 6 | Potential Hold | 1.2 V | | 200 hr | N₂ | 1 |

Mass activities were calculated by determining the associated current at 0.9 V on the ORR plot. This value was then divided by the amount of catalyst loaded onto the RDE to provide mass activity in A/g catalyst or the amount of Pt loaded onto the RDE to provide specific mass activity in A/g Pt. Tables 8-9 provide mass activities and specific mass activities of the catalyst of Example 11 and TKK 50 at 0.9 V.

**Table 8**

| | | Mass Activity at 0.9 V (A/g catalyst) | | |
|---|---|---|---|---|
| SWC Range | | 0.05-0.6 V | 0.6-1.2 V | 0.6-1.5 V |
| Catalyst of Example 11 | Initial ORR | 3.38 | 3.55 | 4.19 |
| | Final ORR | 1.78 | 2.11 | 4.13 |
| - TKK 50 | Initial ORR | 2.46 | 2.40 | 2.82 |
| | Final ORR | 3.36 | 2.12 | 1.87 |

**Table 9**

| | | Specific Mass Activity at 0.9 V (A/g Pt) | | |
|---|---|---|---|---|
| SWC Range | | 0.05-0.6 V | 0.6-1.2 V | 0.6-1.5 V |
| Catalyst of Example 11 | Initial ORR | 9.359 | 9.844 | 11.615 |
| | Final ORR | 4.930 | 5.833 | 11.431 |
| TKK 50 | Initial ORR | 4.930 | 3.911 | 5.833 |
| | Final ORR | 5.249 | 4.786 | 5.123 |

Table 8 shows that the mass activity of TKK 50 increased as a result of SWC from 0.05-0.6 V, but decreased after SWC for both 0.6-1.2 V and 0.6-1.5 V. The mass activity of the catalyst of Example 11 decreased for SWC at 0.05-0.6 V and 0.6-1.2 V, but did not change significantly for SWC at 0.6-1.5 V. On average, the initial mass activity of the catalyst of Example 11 was 44% higher than the initial mass activity of TKK 50. Table 9 shows that the catalyst of Example 11 also exhibited favorable specific mass activity results.

FIG. 28 shows cyclic voltammograms for the catalyst of Example 11 and TKK 50 before and after SWC from 0.05-0.6 V, 30 s, 1000 cycles.

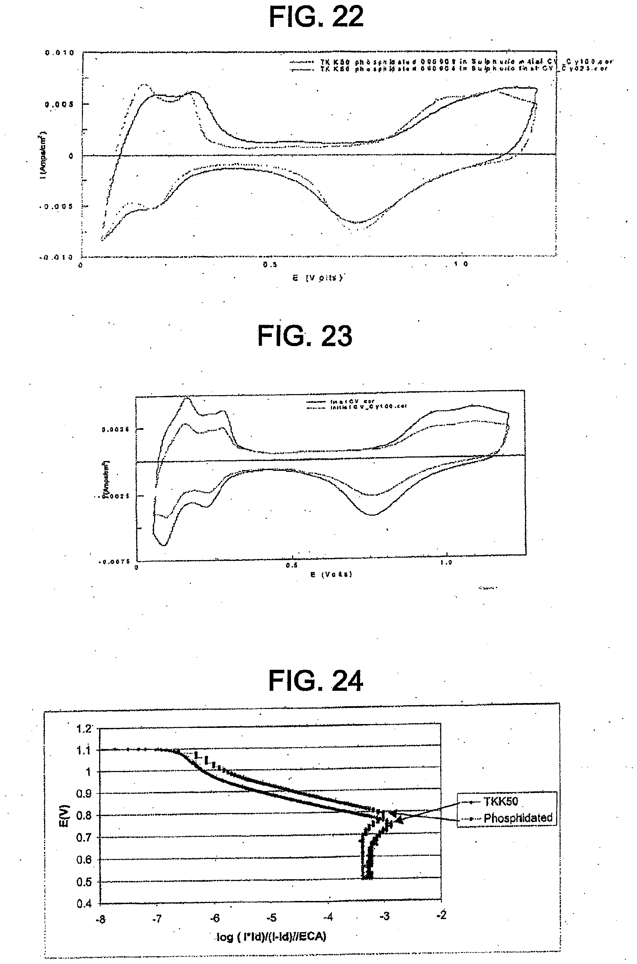

FIG. 22 shows cyclic voltammograms for the catalyst of Example 11 before and after SWC from 0.6-1.2 V, 60 s, 100 cycles. This SWC resulted in the formation of characteristic platinum peaks and a 7% increase in surface area.

FIG. 23 shows cyclic voltammograms for TKK 50 before and after SWC from 0.6-1.2 V, 60 s, 100 cycles.

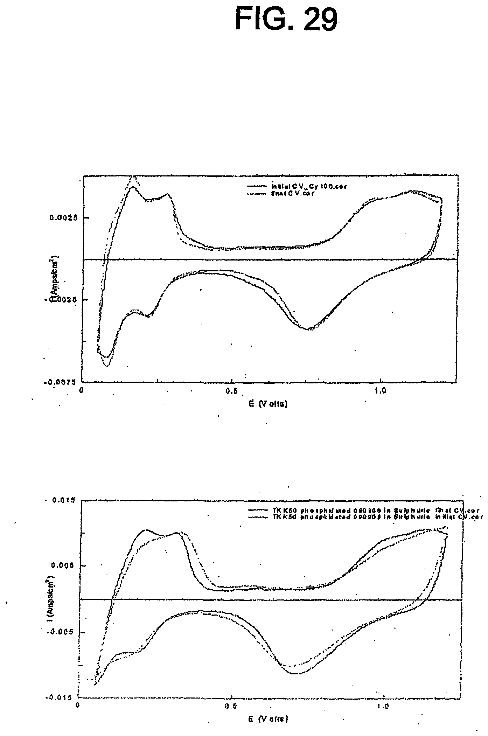

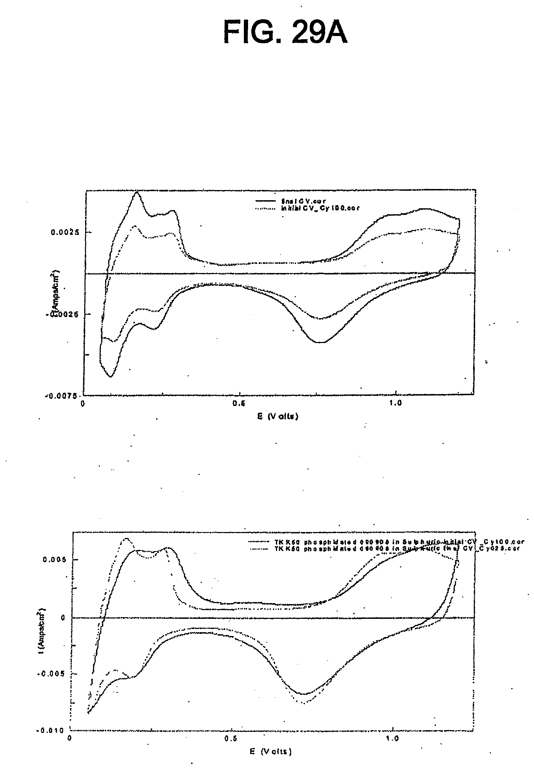

FIG. 29 shows cyclic voltammograms for the catalyst of Example 11 and TKK 50 before and after SWC from 0.6-1.5 V, 60 s, 100 cycles.

FIG. 24 shows initial ORR Tafel plots for TKK 50 and the catalyst of Example 11. The catalyst of Example 11 shows an increased activity compared to TKK 50.

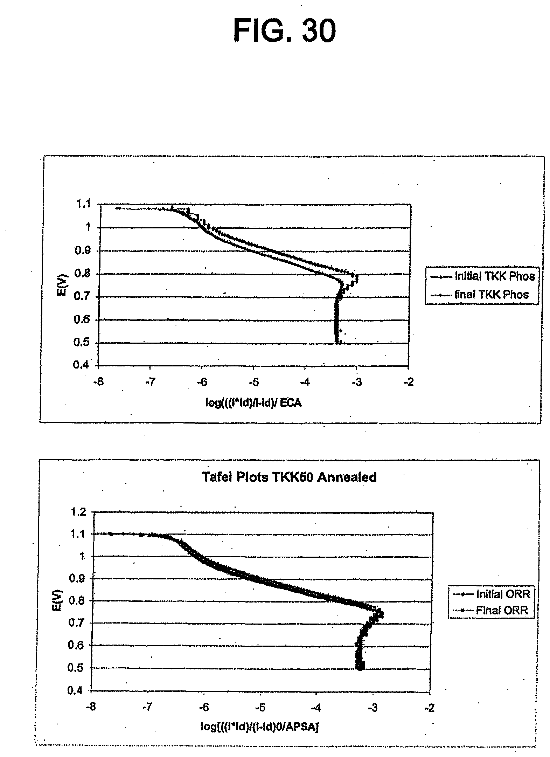

FIG. 30 shows Tafel plots for the catalyst of Example 11 and TKK 50 before and after SWC from 0.05-0.6 V, 30 s, 1000 cycles.

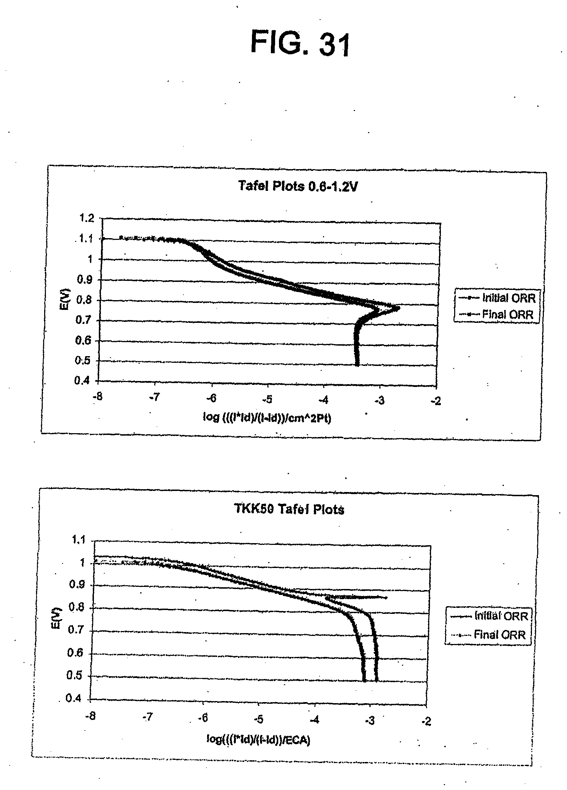

FIG. 31 shows Tafel plots for the catalyst of Example 11 and TKK 50 before and after SWC from 0.6-1.2 V, 30 s, 1000 cycles.

FIG. 32 shows Tafel plots for the catalyst of Example 11 and TKK 50 before and after SWC from 0.6-1.5 V, 60 s, 100 cycles.

Table 10 summarizes the change in ECA for the catalyst of Example 11 and TKK 50 as a result of SWC.

**Table 10**

| | ECA changes, % | | |
|---|---|---|---|
| SWC range | 0.05-0.6 V | 0.6-1.2 V | 0.6-1.5 V |
| TKK 50 | 8.2 | 95.3 | 3.6 |
| Catalyst of Example 11 | 5.7 | 6.7 | -0.3 |

Table 10 shows that ECA for TKK 50 increased 95% as a result of SWC from 0.6-1.2 V. While the surface area increased, the corresponding Tafel plot of FIG. 23 shows a decrease in ORR activity as a result of SWC. Additionally, Table 10 shows SWC from 0.05-0.6 V resulted in an 8% increase in ECA and SWC from 0.6-1.5 V resulted in a 4% increase in ECA. In contrast, Table 10 shows that the catalyst of Example 11 showed small ECA increases as a result of SWC from 0.05-0.6 V and 0.6-1.2 V, respectively, of 6% and 7%, respectively. Furthermore, cycling from 0.6-1.5 V left the ECA of the catalyst of Example 11 essentially unchanged. The results of Table 10 show that the catalyst of Example 11 is more stable, with a smaller increase in ECA upon SWC. This is especially clear in the 0.6-1.2 V range.

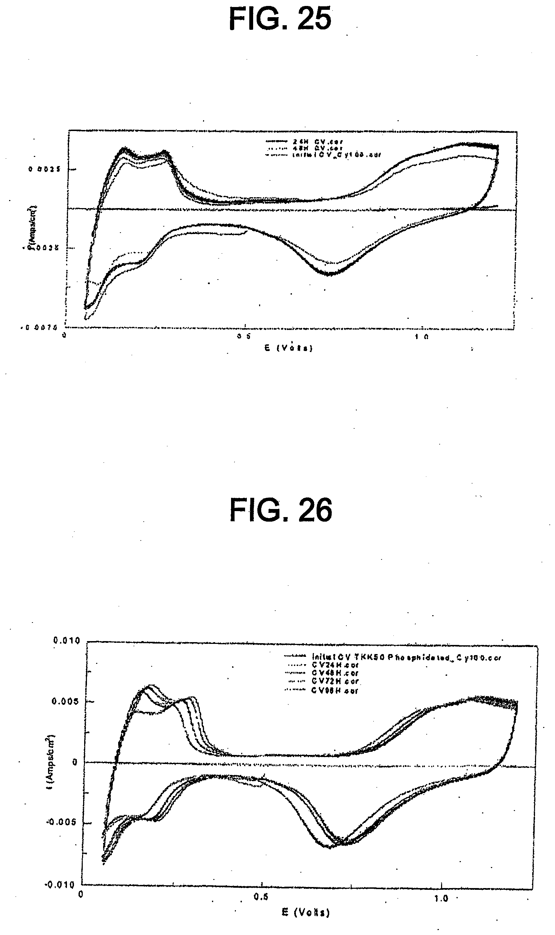

FIG. 25 shows initial, 24 hour, and 48 hour cyclic voltammograms for TKK 50 at a 1.2 V potential hold.

FIG. 26 shows initial, 24 hour, 48 hour, 72 hour, and 96 hour cyclic voltammograms for the catalyst of Example 11 at a 1.2 V potential hold.

The potential hold experiments shown in FIGS. 25-26 were conducted to determine whether platinum phosphide catalyzes carbon support oxidation. The potential hold experiments shows the catalyst of Example 11 is more stable than TKK 50 and does not catalyze carbon support oxidation. Failure of TKK 50 occurred after approximately 41 hours, while failure of the catalyst of Example 11 occurred after approximately 80 hours. Failure, in the context of the experiments, means that there was a significant current spike followed by collapse of the cyclic voltammogram.

In the potential hold experiments for both the catalyst of Example 11 and TKK 50, ECA decreased with time. However, for TKK 50, ECA decreased at a higher rate. The faster decrease in ECA for TKK 50 indicates that TKK 50 promotes faster support degradation thereby promoting faster Pt dissolution or agglomeration.

### Example 15: Synthesis of catalyst using microwave

Approximately 30 mg of TKK50 and 3 mL of trioctyl phosphine (TOP) were combined and treated under ambient pressure with high power microwave radiation (1100W) for approximately 10-11 minutes. TKK50 and TOP were heated to ≥350°C during the microwave treatment.

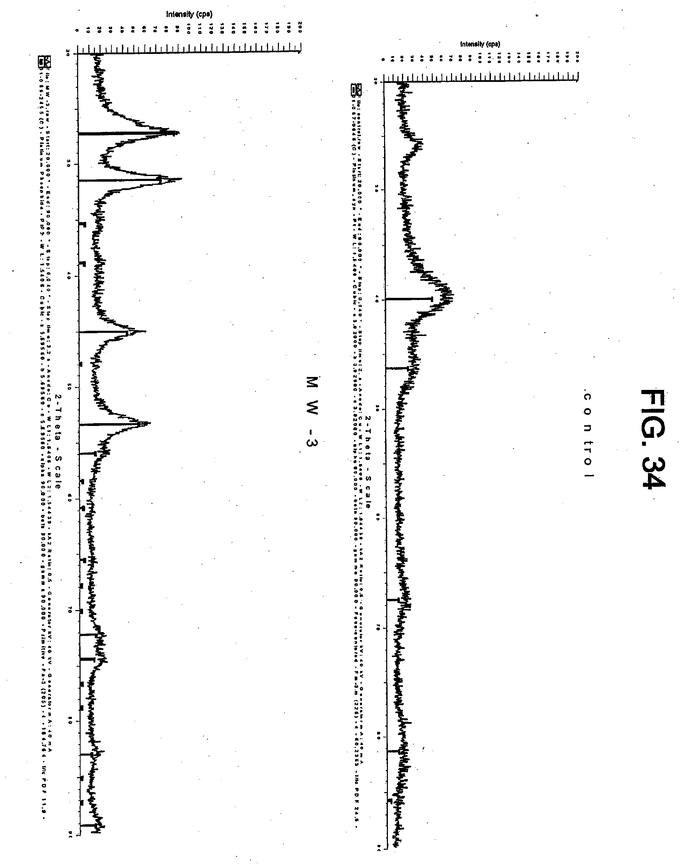

The resulting platinum phosphide catalyst was subjected to XRD to determine its crystalline structure and average crystallite size. FIG. 34 shows the XRD spectra of the platinum phosphide catalyst and TKK 50 (control).

The average crystallite size of the platinum phosphide catalyst made using microwave radiation was 5.7 nm. As a comparison, the average crystallite size of the platinum phosphide catalyst made without microwave radiation was 9-10 nm. The average crystallite size of TKK 50 was 2 nm. This shows that microwave radiation treatment can produce catalysts having a smaller average particle size.

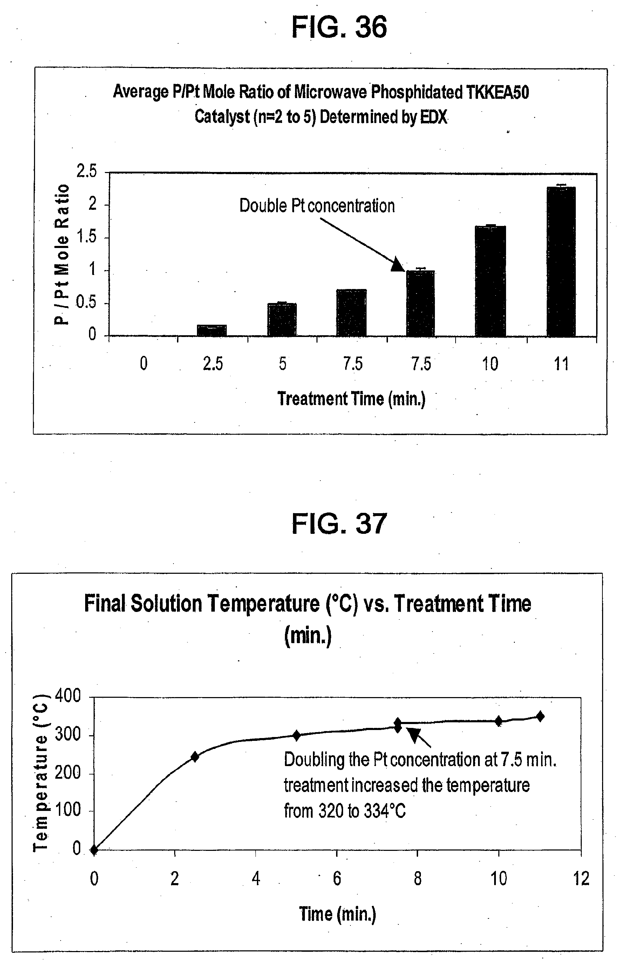

The resulting platinum phosphide catalyst was also subjected to EDX to determine its elemental composition. FIG. 36 shows the average P/Pt mole ratio of the microwave phosphided catalyst as determined by EDX.

### Example 16: Synthesis of catalyst using microwave radiation

Approximately 30 mg of TKK50 and 3 mL of TOP were combined to provide 4 samples. The samples were treated under ambient pressure with a high power microwave radiation (1100W) for 2.5, 5, 7.5, and 10 minutes, respectively.

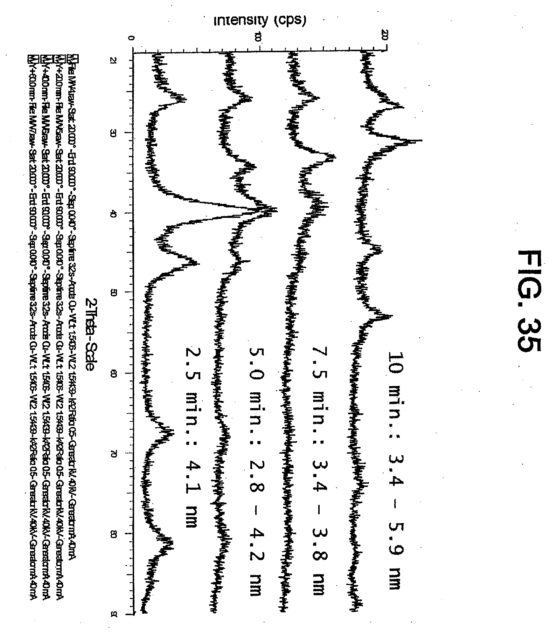

The resulting platinum phosphide catalysts were subjected to XRD to determine their crystalline structure and average crystallite size. FIG. 35 shows the XRD spectra of the platinum phosphide catalysts. The catalyst treated for 2.5 minutes had an average crystallite size of 4.1 nm. The catalyst treated for 5 minutes had an average crystallite size of 2.8-4.2 nm. The catalyst treated for 7.5 minutes had an average crystallite size of 3.4-3.8 nm. The catalyst treated for 10 minutes had an average crystallite size of 3.4-5.9 nm.

The resulting platinum phosphide catalysts were also subjected to EDX to determine their elemental composition. FIG. 36 shows the average P/Pt mole ratio of the microwave phosphided catalysts as determined by EDX.

FIG. 37 shows the effect of microwave radiation treatment time on final solution temperature.

### Example 17: Synthesis of platinum phosphide catalyst using TKK 50 and P

A weighted amount of Phosphorous Red (Puratronic 99.999%) was combined with a weighted amount of TKK 50 in an atomic ratio of Pt:P = 1:2 in a quartz ampoule. The ampoule was vacuumed (to 6.10⁻⁶ Torr) and sealed by CANSCI Glass Production, Burnaby. The sample was then heated at 700°C for 1 hour followed by fast cooling.

### Example 18: Synthesis of catalyst with platinum phosphide surface layer using TKK 52 and P

A weighted amount of Phosphorous Red (Puratronic 99.999%) was combined with a weighted amount of TKK 52 in an atomic ratio of P:Co = 1:1 in a quartz ampoule. The ampoule was vacuumed (to 6.10⁻⁶ Torr) and sealed by CANSCI Glass Production, Burnaby. The sample was then heated at 700°C for 1 hour followed by fast cooling.

### Example 19: Electrochemical evaluation

For electrochemical evaluation, catalysts in 0.1M HClO₄ electrolyte at 30°C, a Princeton Applied Research Potentiostat/Galvanostat 263A and a Pine Research Inst. RDE were used. A standard hydrogen electrode was used as the voltage reference. The electrode rotation speed was 2000 rpm.

0.0216 g of the catalyst of Example 18 and 0.0202 g of the catalyst of Example 17 were transferred to 5 mL sample vials. 2.0 mL of glacial acetic acid was then volumetrically transferred to the sample vials. The samples were sonicated at room temperature for approximately 15 minutes. 5 µL of each sonicated sample was pipetted onto separate RDEs and the solvent was allowed to evaporate under a desktop halogen lamp. 5 µL of the sample was applied to the RDE three times. After the solvent evaporated, 5 µL of a Nafion solution (0.5 mL of a 5% Nafion solution diluted in 5 mL of 2-propanol) was applied to the RDEs and allowed to set at room temperature.

For each catalyst, the electrode was installed and testing initiated. The electrode was subjected to an initial CV cycling from 0.05-1.2 V at 100 mV/s for 100 cycles under N₂. Upon completion of initial CV cycling, the electrolyte was saturated with O₂. The electrode was subjected to an initial ORR with a potential of 0.1 V with respect to OCV and 0.2 V with respect to the reference hydrogen electrode. After ORR, the electrolyte was saturated with N₂ and the electrode was subjected to SWC.

For the catalyst of Example 18, each cycle of SWC held an initial voltage of 0.05 V for 30 seconds and then switched to 0.6 V for 30 seconds. This was repeated for a total of 1000 cycles. For Pt-alloy catalysts, this is the critical dissolution voltage range.

For the catalyst of Example 17, a second SWC range was used: 0.6-1.2 V, 30 seconds at each for 1000 cycles. For non-alloyed Pt catalysts, this is the critical voltage range for Pt dissolution.

Upon completion of SWC, the electrode was subjected to a final 20 cycle CV and a final ORR under the same conditions as the initial CV and the initial ORR. Using these specific cycling ranges accelerates the degradation that would be observed in the standard D.O.E. 0-1.2 V testing range.

In a potentiostatic experiment, an electrode loaded with 5 µL of catalyst was subjected to a 100 cycle CV from 0.05 to 1.2 V at 100 mV/s. The catalyst was then subjected to a static potential of 1.2 V until failure or for 200 hours. At 12 hour intervals, the electrode was subjected to a 10 cycle CV and the electrolyte level was maintained with 18.2 mΩ water. Every 3 days electrolyte was changed and a reference electrode was renewed.

Table 11 provides a summary of these experiments.

**Table 11**

| Name | | Conditions | | Sweep Rate/Hold Time | Electrolyte Saturation Gas | Number of Cycles |
|---|---|---|---|---|---|---|
| 1 | Initial CV | 0.05-1.2 V | | 100 mV/s | N₂ | 100 |
| 2 | Initial ORR | 0.1 vs OCV to 0.2 vs ref | | 2 mV/s | O₂ | 1 |
| 3 | SWC | A | 0.05-0.6 V | 30 sec | N₂ | 1000 |
| | | B | 0.6-1.2 V | 30 sec | N₂ | 1000 |
| 4 | Final CV | 0.05-1.2 V | | 100 mV/s | N₂ | 20 |
| 5 | Final ORR | 0.1 (OCV) to 0.2 (ref) | | 2 mV/s | O₂ | 1 |
| 6 | Potential Hold | 1.2 V | | 200 hrs | N₂ | 1 |

Tables 12 and 13 show changes in mass activity and ECA as a result of SWC for TKK 50, TKK 52, and the catalysts of Examples 17 and 18. Table 12 shows ECA loss due to SWC (0.6-1.2 V) for the catalyst of Example 17 was 50% lower than ECA loss for TKK 50. Table 12 also shows that the mass activity change as a result of SWC (0.6-1.2 V) was essentially the same for TKK 50 and the catalyst of Example 17. Table 13 shows that after SWC (0.05-0.6 V), the catalyst of Example 18 exhibited an increase in ECA of 15%, while ECA of TKK 52 was essentially unchanged. Table 13 also shows that the catalyst of Example 18 exhibited a much higher stability than TKK 52, losing only 7% of initial mass activity after SWC (0.05-0.6 V) compared to a 36% loss for TKK 52.

**Table 12**

| SWC range: 0.6-1.2 V | % change | |
|---|---|---|
| | Mass Activity | ECA |
| TKK 50 | -18.5 | -27.5 |
| Catalyst of Example 17 | -14.9 | -12.8 |

**Table 13**

| SWC range: 0.05-0.6 V | % change | |
|---|---|---|
| | Mass Activity | ECA |
| TKK 52 | -35.7 | 0.2 |
| Catalyst of Example 18 | -7.14 | 15.1 |

Although the present invention has been described in connection with specific embodiments thereof, it will be appreciated by those skilled in the art that additions, deletions, modifications, and substitutions not specifically described may be made without departing from the scope of the invention as defined in the appended claims.

## Claims

1. A catalyst comprising platinum phosphide,
**characterized in**
**that** the platinum phosphide has a cubic structure.

2. A catalyst according to claim 1, wherein the platinum phosphide comprises a surface layer on a platinum catalyst core.

3. A catalyst according to claim 2, wherein the platinum catalyst core comprises a Pt-transition metal alloy.

4. A catalyst according to claim 3, wherein the transition metal is selected from the group consisting of Co, Fe, Ni, Cu, and combinations thereof.

5. A catalyst according to claim 1, wherein the platinum phosphide is directly on a support material.

6. A catalyst according to claim 5, wherein the support material is selected from the group consisting of a carbon support material, a metal oxide, a carbide, a nitride, a boride, and combinations thereof.

7. A fuel cell comprising the catalyst of claim 1.

8. A fuel cell according to claim 7, wherein the catalyst is located at a cathode.

9. A fuel cell according to claim 7, wherein the catalyst is located at an anode.

10. A fuel cell according to claim 7, wherein the fuel cell is a proton exchange membrane fuel cell (PEMFC).

11. Use of the fuel cell of claim 10 for making electrical power:
a. providing hydrogen to an anode of the fuel cell;
b. reacting the hydrogen at the anode to provide protons and electrons;
c. causing the electrons to travel along an external circuit to a cathode of the fuel cell to provide electrical power;
d. providing oxygen to the cathode; and
e. reacting the protons, electrons, and oxygen at the cathode to provide water.

12. A method of making the catalyst of claim 1, comprising:
a. combining a platinum catalyst with a phosphiding agent; and
b. heating the platinum catalyst and the phosphiding agent.

13. A method according to claim 12, wherein the phosphiding agent is selected from the group consisting of elemental phosphorous (P), phosphine gas (PH₃), trioctyl phosphine (TOP), phosphides, and combinations thereof.

14. A method according to claim 12, wherein the heating step occurs in a vacuum.

15. A method according to claim 12, wherein the platinum catalyst and the phosphiding agent are heated at a temperature between 200°C and 1000°C for a time period between 5 minutes and 60 minutes.

16. A method according to claim 12, wherein the heating step comprises treating the platinum catalyst and the phosphiding agent with microwave radiation.

## Patentansprüche

1. Katalysator, umfassend Platinphosphid,
**dadurch gekennzeichnet, dass**
das Platinphosphid eine kubische Struktur hat.

2. Katalysator nach Anspruch 1,
**dadurch gekennzeichnet, dass**
das Platinphosphid eine Oberflächenschicht auf einem Platin-Katalysatorkern umfasst.

3. Katalysator nach Anspruch 2,
**dadurch gekennzeichnet, dass**
der Platin-Katalysatorkern eine Platin-Übergangsmetall-Legierung umfasst.

4. Katalysator nach Anspruch 3,
**dadurch gekennzeichnet, dass**
das Übergangsmetall aus einer Gruppe ausgewählt ist, welche Co, Fe, Ni, Cu und Kombinationen hiervon umfasst.

5. Katalysator nach Anspruch 1,
**dadurch gekennzeichnet, dass**
das Platinphosphid direkt auf einem Trägermaterial ist.

6. Katalysator nach Anspruch 5,
**dadurch gekennzeichnet, dass**
das Trägermaterial aus einer Gruppe ausgewählt ist, welche ein Kohlenstoffträgermaterial, ein Metalloxid, ein Karbid, ein Nitrid, ein Borid und Kombinationen hiervon umfasst.

7. Brennstoffzelle mit einem Katalysator nach Anspruch 1.

8. Brennstoffzelle gemäß Anspruch 7,
**dadurch gekennzeichnet, dass**
der Katalysator an einer Kathode angeordnet ist.

9. Brennstoffzelle gemäß Anspruch 7,
**dadurch gekennzeichnet, dass**
der Katalysator an einer Anode angeordnet ist.

10. Brennstoffzelle nach Anspruch 7,
**dadurch gekennzeichnet, dass**
die Brennstoffzelle eine Polymermembranelektrolyt-Brennstoffzelle (PEMFC) ist.

11. Verwendung der Brennstoffzelle nach Anspruch 10 zur Erzeugung elektrischer Leistung:
a. Bereitstellen von Wasserstoff an der Anode der Brennstoffzelle;
b. Reagieren des Wasserstoffs an der Anode zur Bereitstellung von Protonen und Elektronen;
c. Veranlassen einer Strömung der Elektronen entlang eines externen Kreislaufs zur Kathode der Brennstoffzelle, um elektrische Leistung bereitzustellen;
d. Zuführen von Sauerstoff zur Kathode; und
e. Reagieren der Protonen, Elektronen und des Wasserstoffs an der Kathode zum Bereitstellen von Wasser.

12. Verfahren zur Herstellung des Katalysators gemäß Anspruch 1, umfassend:
a. Kombinieren eines Platinkatalysators mit Phosphidierungsmittel; und
b. Erhitzen des Platinkatalysators und des Phosphidierungsmittels.

13. Verfahren nach Anspruch 12,
**dadurch gekennzeichnet, dass**
das Phosphidierungsmittel aus einer Gruppe ausgewählt ist, welche elementaren Phosphor (P), Phosphingas (PH₃), Trioctylphosphin (TOP), Phosphiden und Kombinationen hiervon umfasst.

14. Verfahren nach Anspruch 12,
**dadurch gekennzeichnet, dass**
der Erhitzungsschritt im Vakuum erfolgt.

15. Verfahren nach Anspruch 12,
**dadurch gekennzeichnet, dass**
der Platinkatalysator und das Phosphidierungsmittel auf eine Temperatur zwischen 200° C und 1000° C für eine Zeitspanne von 5 bis 60 Minuten erhitzt werden.

16. Verfahren nach Anspruch 12,
**dadurch gekennzeichnet, dass**
der Erhitzungsschritt eine Behandlung des Platinkatalysators und des Phosphidierungsmittels mit Mikrowellenstrahlung umfasst.

## Revendications

1. Catalyseur comprenant du phosphure de platine,
**caractérisé par**
une structure cubique du phosphure de platine.

2. Catalyseur selon la revendication 1,
**caractérisé par**
le phosphure de platine comprend une couche de surface sur un noyau de catalyseur au platine.

3. Catalyseur selon la revendication 2,
**caractérisé par**
le noyau de catalyseur au platine comprend un alliage de métal de transition platine.

4. Catalyseur selon la revendication 3,
**caractérisé par**
le métal de transition est choisi dans le groupe constitué par Co, Fe, Ni, Cu et leurs combinaisons.

5. Catalyseur selon la revendication 1,
**caractérisé par**
le phosphure de platine se trouve directement sur un matériau de support.

6. Catalyseur selon la revendication 5,
**caractérisé par**
le matériau de support est choisi dans le groupe constitué d'un matériau de support de carbone, d'un oxyde de métal, d'un carbure, d'un nitrure, d'un borure et de leurs combinaisons.

7. Pile à combustible comprenant le catalyseur selon la revendication 1.

8. Pile à combustible selon la revendication 7,
**caractérisé par**
le catalyseur est situé à une cathode.

9. Pile à combustible selon la revendication 7,
**caractérisé par**
le catalyseur est situé à une anode.

10. Pile à combustible selon la revendication 7,
**caractérisé par**
la pile à combustible est une pile à combustible à membrane d'échange de protons (PEMFC).

11. Utilisation d'une pile à combustible selon la revendication 10 pour la fabrication de l'énergie électrique selon la revendication 1, comprenant
a. fournir de l'hydrogène a une anode de la pile à combustible
b. faire réagir de l'hydrogène à l'anode pour obtenir des protons et des électrons
c. amener les électrons à voyager le long d'un circuit externe à une cathode de la pile à combustible pour fournier de l'énergie électrique
d. fournir de l'oxygène à la cathode
e. faire réagir les protons, les électrons et l'oxygène à la cathode pour fournir de l'eau.

12. Procédé de fabrication le catalyseur selon revendication 1, comprenant
a. combiner un catalyseur an platine avec un agent de phosphuration
b. chauffer le catalyseur au platine et l'agent de phosphuration

13. Procédé selon la revendication 12,
**caractérisé par**
l'agent de phosphuration est choisi dans le groupe constitué par le phosphore élémentaire (P), le gaz phosphine (PH3), la trioctylphosphine (TOP), les phosphures et leurs combinaisons.

14. Procédé selon la revendication 12,
**caractérisé par**
l'étape de chauffage est réalisée au vacuum.

15. Procédé selon la revendication 12,
**caractérisé par**
le catalyseur au platine et l'agent de phosphuration sont chauffés à une température entre 200°C et 1000°C pendant une durée entre 5 et 60 minutes.

16. Procédé selon la revendication 12,
**caractérisé par**
l'étape de chauffage comprend le traitement du catalyseur au platine et de l'agent de phosphuration avec un rayonnement micro-ondes.
